# EUROPEAN PATENT APPLICATION

(11) **EP 1 605 056 A2**
(43) Date of publication of application: **14.12.2005**
(21) Application number: 05009497.8
(22) Date of filing: 29.04.2005
(51) Int. Cl.: C12P 13/04, C07F 9/10

(54) **Process for recovering serine**

(30) Priority: 07.05.2004 JP 2004138952
(71) Applicant: The Nisshin OilliO Group, Ltd., Tokyo (JP)
(72) Inventor: Yamane, Tsuneo, Nagoya-shi Aichi-ken (JP); Iwasaki, Yugo, Mie-ken (JP); Takahashi, Namiko, Yokkaichi-shi Mie-ken (JP); Yamamoto, Takaya The Nisshin Oillio Group, Ltd., Nagoya-shi Aichi-ken (JP); Okada, Takahiro c/oThe Nisshin Oillio Group, Ltd., Kanagawa-Ken (JP)
(74) Representative: HOFFMANN EITLE

(57) **Abstract**

Particularly in the recovery and reuse of unreacted serine after the synthesis of phosphatidylserine by the transfer reaction of a phosphatidyl group with phospholipase D, a simple process for recovering serine in which a material inhibitory to the synthesis of phosphatidylserine can be efficiently removed is provided. The present invention provides the following processes for recovering serine polar organic solvent or a mixture of a polar organic solvent and water is added to the unreacted serine containing water-soluble fraction in which the phosphatidylserine has been removed from a reaction mixture in the reaction system and the fraction with the added solvent or the mixture of the solvent and water is washed to obtain the serine.

## Description

### BACKGROUND OF THE INVENTION

### Field of the Invention

The present invention relates to a process for recovering, after completion of reaction, unreacted serine from a reaction system in which phosphatidylserine is synthesized by the transfer reaction of a phosphatidyl group with phospholipase D. Serine recovered according to the present invention is reused particularly for the reaction of synthesizing phosphatidylserine.

### Background Art

Phosphatidylserine is one of naturally occurring phospholipids which have useful physical properties and exhibit physiological effects.

Phosphatidylserine has been employed as a raw material of liposome, and more recently as an element for improving brain functions including the prophylaxis or therapy of dementia.

As the process for preparing phosphatidylserine, a synthetic method with phopholipase D has recently been generally used because of its simplicity. With the synthesis of phosphatidylserine with phospholipase D, there are known mainly the methods for performing the reaction in a two-phase system involving organic solvents and water, and those for performing the reaction in an aqueous system without use of organic solvents.

If phosphatidylserine is intended to be synthesized by these methods, a receptor serine is required to be present in an excessive amount in the reaction system, and thus after completion of the reaction, unreacted serine remains in the reaction system. Serine is very expensive and in an industrial synthesis of phosphatidylserine, it is very important to recover and reuse the unreacted serine.

The procedure of only recovering and reusing the unreacted serine gradually decreases the synthetic yield of phosphatidylserine as shown in comparative examples in the Examples mentioned later. Besides, it has the problem that undesired side reactions are liable to proceed. It is also described by Juneja et al. that the synthetic yield of phosphatidylserine in repeated reactions will be gradually decreased in repeated reactions (Juneja, L.R. et al., Biochim. Biophys. Acta, 1003, 277-283 (1989)). In their experiment, the reaction was carried out in a two-phase system using diethyl ether, and an immobilized enzyme was recovered after reaction and recycled for the repeated reactions. However, the result is that the more the reactions are repeated, the lower the synthetic capacity for phosphatidylserine is.

In addition, it is also described by Juneja et al. that after the reaction, the lowering of the reaction yield upon recovering and reusing the immobilized enzyme for the repeated reactions is due to the inhibition of the reaction by choline as a by-product (Juneja, L.R. et al., J. Ferment. Bioeng., 73, 357-361 (1992)). In that report, they have revealed the role of choline by adding choline oxidase and catalase to decompose choline, thereby restoring the synthetic yield of phosphatidylserine. However, such enzymes as choline oxidase and catalase are manufactured and used only in reagent levels, and thus the method cannot be realized in an industrial level.

Also, as regards the recovering and reusing the unreacted serine for repeated reactions, inhibitory materials are required to be removed in some way, and several methods for purifying the unreacted serine for reusing it have been disclosed.

Japanese Patent Laid-Open Publication No. 173092/1997 discloses a method for purifying and recovering L-serine in the form of an aqueous solution which does not contain choline salts or the like from a reaction mixture after the first reaction by subjecting the aqueous layer of the reaction mixture to filtration through decalite, treatment with active carbon, alkali addition, and finally electrodyalysis. The second reaction is carried out with L-serine concentrated by this method, and the similar result to the first reaction is obtained. An alternative method by treatment with an ion exchange resin is also disclosed. This method has problems that the apparatus of electrodyalysis is expensive, and that if the ion concentration of the solution is increased, electric power, that is the consumption of energy is increased. Furthermore, the method by treatment with an ion exchange resin requires the treatment of regenerating the ion exchange resin with acid and alkali, which involves the charge for the treatment of drainage.

Japanese Patent Laid-Open Publication No. 2002-253288 discloses the recovery of the unreacted L-serine by crystallization from the reacted aqueous solution containing L-serine. This method carried out in an industrial scale has also problems that larger apparatuses and the concentration adjustment and the temperature control of the aqueous solution are required, and that a long period is required, resulting in larger charge.
Patent Reference 1: Japanese Patent Laid-Open Publication No. 173092/1997,
Patent Reference 2: Japanese Patent Laid-Open Publication No. 2002-253288,
Non-Patent Reference 1: Juneja, L.R. et al., Biochim. Biophys. Acta, 1003, 277-283 (1989),
Non-Patent Reference 2: Juneja, L.R. et al., J. Ferment. Bioeng., 73, 357-361 (1992).

### SUMMARY OF THE INVENTION

The present invention is intended to solve the problems described above, and particularly to provide a process for recovering and reusing unreacted serine, in which the materials inhibitory to the reaction or synthesis are efficiently removed by a simple and less burdened manner to recover serine.

The present inventors have found that the problems are solved by conducting the transfer reaction of a phosphatidyl group with phospholipase D followed by the addition of a polar organic solvent or a mixture of a polar organic solvent and water to an unreacted serine containing fraction to dissolve the reaction inhibitory materials, and thus recovering serine as precipitate, and have completed the present invention on the basis of this finding. The invention can be contemplated to have been realized by utilizing the difference of properties between choline as the inhibitory material, which is easy to dissolve in polar organic solvents, and serine, which hardly dissolves but precipitates in polar organic solvents.

That is, the present invention relates fundamentally to the following processes for recovering serine:
(1) a process for recovering unreacted serine from a reaction system after the synthesis of phosphatidylserine by the transfer reaction of a phosphatidyl group with phospholipase D, comprising adding a polar organic solvent or a mixture of a polar organic solvent and water to the unreacted serine containing water-soluble fraction in which the phosphatidylserine has been removed from a reaction mixture in the reaction system and washing the fraction with the added solvent or the mixture of the solvent and water to obtain the serine;
(2) a process for recovering the serine according to (1) above, wherein the synthesis of phosphatidylserine by the transfer reaction of a phosphatidyl group with phospholipase D is performed in an aqueous system in the absence of an organic solvent;
(3) a process for recovering the serine according to (1) above, wherein the synthesis of phosphatidylserine by the transfer reaction of a phosphatidyl group with phospholipase D is performed in a two-phase system with an organic solvent and water; and
(4) a process for recovering the serine according to any one of (1)-(3) above, wherein a polar organic solvent used for washing is ethanol, acetone or a mixture thereof.

Serine recovered by washing according to the process of the present invention, from which the reaction inhibitory materials have been removed, can be employed again with hardly lowering the synthetic yield of phosphatidylserine in contrast with the case that the serine containing fraction is merely recovered and subjected to recycle. In addition, if circumstances, e.g., the two-phase reaction of an organic solvent and water, require, competitive hydrolysis reaction which is the production of phosphatidic acid as side reaction is liable to proceed in the case that the serine containing fraction is merely recovered and reused, but such reaction can be inhibited by the process according to the present invention.

Furthermore, the process of the present invention is simpler and lesser burdened as compared with the prior art methods such as electrodyalysis, ion exchange treatment, and crystallization, and it is also possible to recover and reuse the polar organic solvents used for the washing and removing the inhibitory materials.

### DETAILED DESCRIPTION OF THE INVENTION

The process for recovering serine according to the present invention is, as described above, a process for recovering unreacted serine from a reaction system after the synthesis of phosphatidylserine by the transfer reaction of a phosphatidyl group with phospholipase D, comprising adding a polar organic solvent or a mixture of a polar organic solvent and water to the unreacted serine containing water-soluble fraction in which the phosphatidylserine has been removed from a reaction mixture in the reaction system and washing the fraction with the added solvent or the mixture of the solvent and water to obtain the serine. Basically, the synthetic reaction of phosphatidylserine may be conducted in an aqueous system without use of organic solvents, a two-phase system involving organic solvents and water, or organic solvents alone.

In the present invention, the synthesis of phosphatidylserine includes all of the syntheses of phosphatidylserine by base exchange with use of phospholipase D. Phosphatidylserine is synthesized with main materials such as a material phospholipid, serine (either D- or L-isomer) and phospholipase D. These materials may be used in a variety of grades, and if necessary, other additives such as emulsifiers, buffers, inorganic salts, and the like may be used.

As regards the phospholipid as the starting material, all of the phospholipids which may be used as the substrate of phospholipase D including those extracted from natural sources such as animals, plants and marine products, and synthetic products can be used in the present invention. Also, either of unpurified (containing ingredients other than the phospholipids), partly purified or purified phospholipids may be used in the present invention. The purification ,levels of the starting material may be determined in view of the purity of the desired phosphatidylserine. Phosphatidylcholine and phosphatidylethanolamine are particularly effective substrates as compared with other phospholipids, and e.g. soybean lecithin and yolk lecithin as products for practical use are commercially available.

All of enzymes having phosphatidyl group transfer activity may be used as the enzyme in the present invention. All of known phospholipase Ds derived from microorganisms may be used in the present invention, and include as the typical examples those derived from genus Streptomyces such as Streptomyces prunicolor and Streptomyces antibioticus; genus Streptoverticillium such as Streptoverticillium cinnamomeum and Streptoverticillium griseocarneum; genus Actinomadura such as Actinomadura sp. Strain No. 362 and the like; and genus Kitasatosporia such as Kitasatosporia chromogema. In addition, phospholipase Ds derived from plants such as carrot cabbage, spinach, and the like can be used as well. While these phospholipase Ds have preferably higher activities, the commercially available ones as well as any one of the purification levels including crude enzymes, partly purified enzymes and purified enzymes can be also used in the present invention.

While either one of L- or D-serines or the racemic body thereof may be used as the serine which is the receptor in the synthetic reaction of phosphatidylserine, it is desirable to use L-serine for food applications.

The synthetic reaction of phosphatidylserine in the present invention can be carried out by any known or appropriate methods therefor, and the phospholipid and phospholipase D as the starting materials may be used in either of the immobilized form in which these materials are adsorbed on a conventional carrier or the free form. With respect to the conventional known synthetic reaction described above, the aqueous, system basically without use of organic solvents, the two-phase system involving organic solvents and water, or the system of organic solvents alone are known, and there may be referred to, e.g. Japanese Patent Laid-Open Publication Nos. 2002-272493 and 2000-333689, and US Patent Laid-Open Publication No. US2002/0155558 (aqueous system), and Japanese Patent Laid-Open Publication No. 173092/1997, Yamane T., et al., Biochim. Biophys. Acta. 1003, 277-283 (1989), and Japanese Patent Laid-Open Publication No. 2-79990 (two-phase system).

In the synthetic reaction of phosphatidylserine, there may be used in addition to the above reaction materials, if necessary, e.g., in the case of improving the synthetic yield, additives including emusifiers such as sodium dodecyl sulfate, and the like, buffers such as acetate buffers, and the like, and inorganic salts such as calcium chloride, sodium chloride, magnesium chloride, and the like.

The synthetic reaction of phosphatidylserine can be conducted by suspending a, phospholipid of either of the forms adsorbed on a carrier or dissolved in an organic solvent in an aqueous solution containing an excessive amount of serine and phospholipase D in an amount sufficient to the reaction, and maintaining the mixture under mild agitation. Alternatively, when a carrier on which a phospholipids is adsorbed is used, the reaction can be also conducted in such a manner, for example, that the carrier having the phospholipids adsorbed thereon is loaded on a column through which the aqueous solution containing serine and phospholipase D is circulated. The synthetic reaction described above is generally conducted for 0.5-48 hours, preferably 1-24 hours. The reaction temperature may be the optimal temperature of the enzyme, and the reaction is preferably in a temperature of 20-50°C. Also, the pH of system is preferably maintained in a range of 4-9 during the reaction.

In the present invention, the unreacted serine is recovered from the reaction mixture after completion of the synthetic reaction of phosphatidylserine, That is, the process for recovering serine according to the present invention is, as described above, a process for recovering unreacted serine from a reaction system after the synthesis of phosphatidylserine by the transfer reaction of a phosphatidyl group with phospholipase D, characterized in that the unreacted serine containing water-soluble fraction in which the phosphatidylserine has been removed from the reaction mixture was added and washed with a polar organic solvent, or a mixture of polar organic, solvent and water to give serine. Basically, the synthetic reaction of phosphatidylserine may be conducted in an aqueous system without use of organic solvents, a two-phase system involving an organic solvent and water, or organic solvents alone, and the reaction is generally conducted in the former two systems (aqueous system, two-phase system).

In the synthesis in the two-phase system with use of organic solvents including non-polar solvents such as ethyl acetate, diethyl ether or the like, or a mixture of polar/non-polar solvents such as hexane/acetone or the like, serine may be recovered efficiently by separating an organic solvent layer containing phosphatidylserine as a product and an aqueous layer containing unreacted serine, to which aqueous layer having been subjected to no further operations or concentration or drying is added a polar organic solvent or a mixture of a polar organic solvent and water to wash the aqueous layer for dissolving and removing the inhibitory materials, The aqueous layer containing serine can be separated e.g., by centrifugation usually at about 3000 g or by stationary separation. The aqueous layer separated can be concentrated e.g., by heating or in an evaporator under reduced pressure, and it can be dried by heating, lyophilization, vacuum drying, or the like.

When phosphatidylserine is synthesized in a homogeneous aqueous system without use of organic solvents, the product phosphatidylserine is separated e.g., by adsorption on carriers such as silica gel or calcium sulfate or by sedimentation, e.g. centrifugation usually at about 500-3000 g, and the aqueous solution containing serine (liquid water-soluble fraction) having been subjected to no further operations or concentration or drying as described above may be added with a polar organic solvent or a mixture of polar organic solvent and water for washing.

Furthermore, when phosphatidylserine is synthesized in an organic solvents without addition of water, fractions containing unreacted serine may be collected by filtration or the like and directly or after drying added with a polar organic solvent or a mixture of a polar organic solvent and water for washing.

While polar solvents, such as ethanol, methanol or acetone, or mixtures thereof can be used as the polar organic solvents, ethanol and acetone is preferred in the case of using phosphatidylserine for food applications.

While it is essential in the present invention to wash the water-soluble fractions containing serine including the reaction mixture from which phosphatidylserine has been removed, or concentrate or dry product thereof with a polar organic solvent or a mixture of a polar organic solvent and water (also referred to as washing solution), it is preferred to use a polar organic solvent or a mixture of a polar organic solvent and water to the dry product of the water-soluble fraction e.g., when it is necessary to control the water concentration. In either case, it is also possible to use a mixture of a plurality of polar organic solvents and water. In this connection, if too much amount of water is used in the washing step described above, the recovery of serine is lowered due to the dissolution of serine into the washing solution. Therefore, it is necessary to take account of such point. Taking the recovery into consideration, the amount of water mixed with the polar organic solvents is preferably about 30% by volume or less.

The amount of an organic solvent or the mixture of the organic solvent and water used for washing (washing solution) may be changed according to necessities, and it is preferably e.g., in the range of about 4-10 folds to the volume of dry reaction products (e.g., in lyophilized form).

As regards the temperature in the washing step, it is possible to perform the washing even at ordinary temperature, but higher washing efficiency will be realized by heating preferably at about 40-60°C as the temperature of the washing solution.

It is possible to recover serine in crystalline or deposit (solid) form in the washing step by adding a polar organic solvent or a mixture of a polar organic solvent and water to the water-soluble fraction, which is then washed by sufficient stirring operation or the column washing or the like, followed by centrifugation usually at about 3000 g or by filtration or the like. The serine thus recovered may be dried if necessary.

It should be paid attention in the reuse of the recovered serine to that the polar organic solvents are not necessarily removed if not affect the next time reaction, while they are desired to be removed previously by drying such as vacuum drying if may affect the next time reaction (e.g., if an alcohol is used in the reaction).

In addition, in the case of repeated uses of the recovered serine as a practical manner, the synthesis of phosphatidylserine may be repeated in the same reaction scale as the previous one by supplying fresh serine.

As described above, the serine recovered by washing according to the present invention, from which the reaction inhibitory materials have been removed, can be reused with hardly lowering the synthetic yield of phosphatidylserine unlike the case of recovering and reusing merely the serine containing fraction without washing. Also, in some cases, such as in the two-phase system reaction of an organic solvent and water, the competitive hydrolysis reaction, that is, the production of phosphatidic acid as a side-reaction is liable to proceed in the case of recovering and reusing merely the serine containing fraction, but it is possible to suppress the reaction by the process according to the present invention.

In this context, the expression "%" in the present specification means "% by weight" unless otherwise stated.

### EXAMPLES

### Example 1: Repeated reactions using L-serine recovered by washing according to the present invention

### <Reaction>

To 3 g of soybean lecithin (TRUE LECITHIN KOGYO Inc.); SLP-PC55, phosphatidylcholine 66%) In 9 ml of water was added 360 mg of calcium sulfate to be mixed. In addition, 3.2 g of L-serine, 0.5 ml of 1 M acetate buffer (pH 5.6) and 0.5 ml of an aqueous PLD solution (30 U/ml, derived from Streptomyces antibioticus) were added, and the resulting mixture was reacted under shaking at 40°C for 24 hours. After reaction, a 0.1 ml portion of the reaction mixture was mixed with 0.05 ml of 1 N hydrochloric acid added and then with 0.2 ml of chloroform/methanol (2/1) added, and the chloroform layer was separated. The phospholipids in the chloroform layer were developed with chloroform/methanol/acetic acid (40/15/6) as a developing solvent, and the development pattern was analyzed with a YATROSCANNER.

### <Recovery of L-Serine>

After reaction, the reaction mixture was separated into supernatant and precipitates by centrifugation at 8000 rpm for 15 minutes. The precipitates were mixed with 20 ml of water added, and the mixture was further separated into supernatant and precipitates by centrifugation. These supernatants were combined, to which 100 ml of ethanol was added. After agitation and cooling in ice, the mixture was centrifuged to remove the supernatant, and the precipitate was dried in vacuum to recover L-serine. Also, the amount of choline was measured as follows:

To a solution of 1 g of Triton X-100, 100 mg of 4-aminopyridine and 50 mg of phenol in 200 ml of 10 mM Tris-HCl buffer (pH 8) were added 200 U of choline oxidase and 200 U of peroxidase to prepare a chromogenic reagent. The mixture of 125 *µ* l of the reagent, and a 50 *µ* l portion of an aqueous solution of the L-serine recovered was incubated at 37°C for 20 minutes before measurement of its absorbance at 500 nm. In this connection, a calibration curve was made with choline chloride.

### <Repeated Reactions>

The reaction was repeated four times with a reaction system of which scale is reduced relative to the amount of the recovered L-serine.

### <Results>

**Table 1:**

| Composition of phospholipids (%) | | | | | |
|---|---|---|---|---|---|
| | 1st | 2nd | 3rd | 4th | 5th |
| PS | 65.6 | 55.5 | 53.7 | 60.1 | 57.0 |
| PA | 23.4 | 26.0 | 29.8 | 21.9 | 21.5 |
| PS: Phosphatidylserine; PA: Phosphatidic acid. | | | | | |

**Table 2:**

| Recovery yield of L-serine and the amount of choline in the recovered L-serine | | | | |
|---|---|---|---|---|
| | After 1st reaction | After 2nd reaction | After 3rd reaction | After 4th reaction |
| Recovery (%) | 87.3 | 65.7 | 57.9 | 50.0 |
| Choline (µ mol/g) | 82 | 49 | 53 | 50 |

### Example 2: Repeated reactions using recovered L-serine washed according to the present invention

### <Reaction>

It was carried out in the same manner as in Example 1.

### <Recovery of L-Serine>

It was carried out in the same manner as in Example 1.

### <Repeated Reactions>

The reaction was repeated three times, under the same conditions as in the first reaction, with the recovered L-serine while supplying a shortage amount of fresh L-serine to the reaction system.

### <Results>

**Table 3:**

| Composition of phospholipids (%) | | | | |
|---|---|---|---|---|
| | 1st | 2nd | 5rd | 4th |
| PS | 59.4 | 60.5 | 58.7 | 62.0 |
| PA | 23.5 | 23.1 | 23.6 | 23.5 |

**Table 4:**

| Recovery yield of L-serine and the amount of choline in the recovered L-serine | | | | |
|---|---|---|---|---|
| | After 1st reaction | After 2nd reaction | After 3rd reaction | After 4th reaction |
| Recovery (%) | 89.3 | 74.8 | 73.1 | 77.5 |
| Choline (µ mol/g) | 72 | 58 | 62 | 56 |

### Comparative Example 1: Repeated reactions using the recovered serine without washing

### <Reaction>

It was carried out in the same manner as in Example 1.

### <Recovery of L-Serine>

After reaction, the reaction mixture was separated into supernatant and precipitate by centrifugation at 8000 rpm for 15 minutes. The precipitate was mixed with 20 ml of water added, and the mixture was further separated into supernatant and precipitate by centrifugation. These supernatants were combined and lyophilized to recover L-serine. Also, the amount of choline was measured in the same manner as in Example 1.

### <Repeated Reactions>

It was carried out in the same manner as in Example 1.

### <Results>

**Table 5:**

| Composition of phospholipids (%) | | | | | |
|---|---|---|---|---|---|
| | 1st | 2nd | 3rd | 4th | 5th |
| PS | 61.7 | 46.0 | 35.5 | 36.4 | 31.8 |
| PA | 23.4 | 20.9 | 19.0 | 22.6 | 18.0 |

**Table 6:**

| Recovery yield of L-serine, and the amount of choline in the recovered L-serine | | | | |
|---|---|---|---|---|
| | After 1st reaction | After 2nd reaction | After 3rd reaction | After 4th reaction |
| Recovery (%) | 98.0 | 97.5 | 98.9 | 97.2 |
| Choline (µ mol/g) | 396 | 587 | 797 | 970 |

### Example 3: Repeated reactions using recovered L-serine washed according to the present invention

### <Reaction>

To 49 ml of water were added 17.85 g of L-serine and 1 ml of an aqueous solution of phospholipase D (SEIKAGAKU KOGYO (Inc.); derived from Actinomadura sp., adjusted to an aqueous solution of 30 U/ml). A solution of 0.7 g of soybean lecithin (TRUE LECITHIN KOGYO (Inc.); SLP-PC55, phosphatidylcholine 66%) in 50 ml of diethyl ether was further added to the mixture, and reacted under stirring with a stirrer at 500 rpm at 30°C for 8 hours.

After reaction, a 0.1 ml portion of the reaction mixture was mixed with 0.05 ml of 1 N hydrochloric acid added and then with 0.2 ml of chloroform/methanol (2/1) added, and the chloroform layer was separated. The phospholipids in the chloroform layer were separated by thin layer chromatography with chloroform/ethanol/methanol/formic acid/water (13/3/2/2/0.5) as a developing solvent, colored wit the Dittmer reagent, and then analyzed with a chromatoscanner.

### <Recovery of L-Serine>

After reaction, the reaction mixture was separated into an upper layer containing phospholipids and a lower layer containing the unreacted L-serine by centrifugation at 3000 rpm for 20 minutes. After most of water in the lower layer was removed on a rotary evaporator, the residue was dried in vacuum to recover L-serine. Furthermore, the L-serine thus recovered was washed with 200 ml of 80% acetone (V/V), added thereto, under stirring. After washing, the serine was subjected to filtration with a filter paper and vacuum drying to give the recovered L-serine. Also, the amount of choline was measured in the same manner as in Example 1.

### <Repeated Reactions>

The reaction was repeated two times, under the same conditions as in the first reaction, with the recovered L-serine while supplying a shortage amount of fresh L-serine to the reaction system.

### <Results>

**Table 7:**

| Composition of phospholipids (%) | | | |
|---|---|---|---|
| | 1st | 2nd | 3rd |
| PS | 52.0 | 51.6 | 50.6 |
| PA | 8.9 | 9.9 | 9.8 |

**Table 8:**

| Recovery yield of L-serine and the amount of choline in the recovered L-serine | | |
|---|---|---|
| | After 1st reaction | After 2nd reaction |
| Recovery (%) | 85.5 | 83.3 |
| Choline (µ mol/g) | 12 | 14 |

### Comparative Example 2: Repeated reactions using the recovered L-serine without washing

### <Reaction>

It was carried out in the same manner as in Example 3.

### <Recovery of L-Serine>

The reaction mixture was separated into an upper layer containing phospholipids and a lower layer containing the unreacted L-serine by centrifugation at 3000 rpm for 20 minutes. After most of water in the lower layer was removed on an rotary evaporator, the residue was dried in vacuum to give recovered L-serine. Also, the amount of choline was measured in the same manner as in Example 1.

### < Repeated Reactions>

It was carried out in the same manner as in Example 3.

### <Results>

**Table 9:**

| Composition of phospholipids (%) | | | |
|---|---|---|---|
| | 1st | 2nd | 3rd |
| PS | 49.2 | 42.6 | 39.2 |
| PA | 8.0 | 15.1 | 17.6 |

**Table 10:**

| Recovery yield of L-serine and the amount of choline in the recovered L-serine | | |
|---|---|---|
| | After 1st reaction | After 2nd reaction |
| Recovery (%) | 89.2 | 81.8 |
| Choline (µ mol/g) | 49 | 81 |

## Claims

1. A process for recovering unreacted serine from a reaction system after the synthesis of phosphatidylserine by the transfer reaction of a phosphatidyl group with phospholipase D, comprising adding a polar organic solvent or a mixture of a polar, organic solvent and water to the unreacted serine containing water-soluble fraction in which the phosphatidylserine has been removed from a reaction mixture in the reaction system and washing the fraction with the added solvent or the mixture of the solvent and water to obtain the serine.

2. A process for recovering the serine according to claim 1, wherein the synthesis of phosphatidylserine by the transfer reaction of a phosphatidyl group with phospholipase D is performed in an aqueous system in the absence of an organic solvent.

3. A process for recovering the serine according to claim 1, wherein the synthesis of phosphatidylserine by the transfer reaction of a phosphatidyl group with phospholipase D is performed in a two-phase system with an organic solvent and water.

4. A process for recovering the serine according to any one of claims 1-3, wherein a polar organic solvent used for washing is ethanol, acetone or a mixture thereof.
